# EUROPEAN PATENT APPLICATION

(11) **EP 1 803 863 A2**
(43) Date of publication of application: **04.07.2007**
(21) Application number: 06026571.7
(22) Date of filing: 21.12.2006
(51) Int. Cl.: E04B 1/82, E04F 15/20

(54) **Board construction assembly for reducing sound transmission and method**

(30) Priority: 30.12.2005 US 322986
(71) Applicant: Johns Manville, Denver CO 80202 (US)
(72) Inventor: Babineau, Francis John, Parker, Colorado 80138 (US); Swales, Timothy G., Aurora, Colorado 80016 (US); Hugh, Maylene Kay, Westminster, Colorado 80234 (US); Scheerlinck, Philippe M., Lakewood, Colorado 80232 (US)
(74) Representative: Luderschmidt, Schüler & Partner

(57) **Abstract**

An underlayment for supplementing one or more mechanical properties of conventional wall, ceiling, or floor board is used to in a wall, ceiling, or floor assembly that may be fabricated on site. The assembly includes a first and second wall, ceiling, or floor boards which each have mechanical properties, and the underlayment which has at least one supplemental mechancial property for supplementing the physical properties of the first and second boards. The second board is secured to the first board with the underlayment sandwiched between the second and first boards to form a wall, ceiling, or floor assembly with the supplemental physical property or properties of the underlayment. The supplemental physical property or properties of the underlayment may include, but are not limited to, sound transmission reduction.

## Description

### BACKGROUND

The subject matter disclosed herein relates to an underlayment for supplementing one or more mechanical properties of conventional wall, ceiling, and/or floor boards; to the wall, ceiling, and/or floor assemblies that include the underlayment disclosed herein; and to the method of fabricating and installing such assemblies.

Current practices for constructing walls, ceilings, and floors of residential and commercial buildings (hereinafter sometimes referenced as "horizontal and/or vertical building components") typically utilize conventional wall, ceiling, and floor boards, such as, but not limited to, gypsum boards, cement boards, and wood fiber boards (e.g., OSB boards, particle boards, and plywood). While horizontal and vertical building components constructed with these conventional wall, ceiling, and floor boards meet the basic requirements for residential and commercial horizontal and/or vertical building components, certain applications arise where it is necessary or desirable to provide horizontal and vertical building components with mechanical properties not provided by these conventional construction boards or not provided by these conventional construction boards to the extent required or desired for the applications. A mechanical property necessary or desirable for certain applications and not provided or only partially provided by conventional construction boards includes, but is not limited to, sound transmission reduction. For example, it might be necessary or desirable to have the external walls of a living portion of a home or working areas of a commercial building or walls between the living portion of a home or working areas of a commercial building and an attached garage that have greater sound transmission reduction when compared to walls made of conventional wallboards. It might also be necessary or desirable to have ceilings and/or floors of a home or commercial building that have greater sound transmission reduction when compared to walls made of conventional wallboards.

In addition to being able to supplement the mechanical properties (enhance the existing mechanical properties and/or add new mechanical properties) of conventional wall, ceiling, and/or floor boards used in new building construction and enhance the performance of these construction boards and the horizontal and vertical building components made with these construction boards, it would also be advantageous to be able to enhance the performance of horizontal and/or vertical building components in existing building structures without having to remove the existing wall, ceiling, and/or floor boards forming the walls, ceilings, and floors of these existing structures.

Accordingly, there is a need for wall, ceiling, and floor boards having improved mechanical performance characteristics, including greater sound transmission reduction, when compared to horizontal and/or vertical building components made of conventional wallboards.

The foregoing examples of the related art and limitations related therewith are intended to be illustrative and not exclusive. Other limitations of the related art will become apparent to those of skill in the art upon a reading of the specification and a study of the drawings.

### SUMMARY

The following embodiments and aspects thereof are described and illustrated in conjunction with systems, tools, and methods which are meant to be exemplary and illustrative, not limiting in scope. In various embodiments, one or more of the above-described problems have been reduced or eliminated, while other embodiments are directed to other improvements.

The subject matter disclosed herein provides an underlayment for supplementing one or more mechanical properties of horizontal and/or vertical building components and especially for supplementing one or more mechanical properties of conventional wall, ceiling, and floor construction components. The underlayment may be used to enhance the performance of horizontal and/or vertical building components in the construction of new buildings and in the renovation of existing buildings without having to remove existing horizontal and/or vertical building components forming the walls, ceilings and/or floors of existing buildings. Wall, ceiling, and floor assemblies that include the underlayment and the method of fabricating and installing such assemblies on site are disclosed herein.

The underlayment disclosed herein is a compliant material that exhibits one or more mechanical properties that can enhance the performance of horizontal and/or vertical building components, especially walls, ceilings, and floors made with conventional wall, ceiling, and floor construction components. These wall, ceiling, and floor construction components include, but are not limited to, wall, ceiling, and floor construction boards such as, but not limited to, 4X8, 4X9, 4X10, and 4X12 foot gypsum boards; cement boards; and wood fiber boards (e.g., OSB boards, particle boards, and plywood); concrete walls, ceilings, and floors; decorative wall and ceiling construction components, such as, but not limited to, laminates with decorative surface layers (e.g. hardwood or simulated hardwood surface layers, fabric layers, etc.); and decorative floor construction components, which may be a permanent component of a floor or an unattached or readily removable floor construction component that overlies conventional permanent floor construction components, such as, but not limited to carpeting, cushioned carpeting, rugs, cushioned rugs, vinyl flooring, cushioned vinyl flooring, tiles, flexible or vinyl tiles, and flooring laminates with decorative surface layers (e.g. hardwood or simulated hardwood surface layers, tile or simulated tile surface layers, etc.). The underlayment disclosed herein enhances one or more mechanical properties of these wall, ceiling, and/or floor construction components by supplementing the mechanical properties of these wall, ceiling, and/or floor construction components. For example, when the underlayment is combined with a wall, ceiling, or floor component to form a wall, ceiling, or floor construction component/underlayment assembly, the underlayment can supplement the mechanical properties of the construction component by enhancing one or more existing mechanical properties of the construction component and/or by adding one or more new mechanical properties to those of the construction component. The supplemental mechanical properties imparted to a construction component/underlayment assembly by the underlayment disclosed herein include mechanical properties such as, but not limited to, enhanced sound transmission reduction.

In one embodiment, the horizontal and/or vertical building component/underlayment assembly for use in a horizontal and/or vertical building component includes a first and second horizontal and/or vertical building component which each have mechanical properties and the underlayment component which has at least one supplemental mechanical property for supplementing the mechanical properties of the first and second horizontal and/or vertical building component. The components of this construction component/underlayment assembly are permanently affixed to each other for the service life of the assembly. The first and second wall, ceiling, or floor construction components of this construction component/underlayment assembly may have the same or different mechanical properties and may be made from the same type of construction component or a different type of construction component. For example, the assembly may include first and second construction components that are each wall, ceiling, or floor construction boards. The assembly may include first and second construction components where one construction component is a wall, ceiling, or floor construction board and the second construction component is a decorative wall, ceiling, or floor construction component. The first and second construction components are permanently secured to each other with the underlayment component sandwiched between the first and second construction components to form a wall, ceiling, or floor construction component/underlayment assembly with the supplemental mechanical property or properties of the underlayment.

In one embodiment, the underlayment component is first secured, e.g., with an adhesive or mechanical fasteners such as staples, to one of the construction components and the construction components are then permanently secured to each other to form the construction component/underlayment assembly. Typically, one of the construction components is already secured to structural members of a wall, ceiling, or floor that may be a wall, ceiling or floor of a building under construction or under renovation. However, fasteners securing the first and second construction components together can also be used to secure the underlayment component to the construction components and/or to secure the entire construction component/underlayment assembly to structural members of the wall, ceiling, or floor.

In another embodiment, a floor construction component/underlayment assembly of the subject invention for use in floor construction includes a first and second floor construction components which each have mechanical properties and the underlayment component which has at least one supplemental mechanical property for supplementing the mechanical properties of the first and second floor construction components. The components of this construction component/underlayment assembly are not permanently affixed to each other for the service life of the assembly. The first and second floor construction components of this embodiment of the construction component/underlayment assembly typically have different mechanical properties and are typically made from different types of construction components. For example, the assembly typically includes a first construction component that is a floor construction board, a concrete floor construction component, etc., and a second construction component that is a decorative floor construction component that overlies, but is unattached to or readily removable from the first construction component. Such decorative floor construction components include, but are not limited to, carpeting, cushioned carpeting, rugs, cushioned rugs, vinyl flooring, cushioned vinyl flooring, tiles, flexible or vinyl tiles, and flooring laminates with decorative surface layers (e.g. hardwood or simulated hardwood surface layers, tile or simulated tile surface layers, etc). The underlayment is sandwiched between the first and second floor construction components to form a floor construction component/underlayment assembly with the supplemental mechanical property or properties of the underlayment component.

In one embodiment, either the underlayment component is laid over the construction board component, concrete floor construction component, etc., and then the decorative floor construction component is laid over the underlayment component or the underlayment component and the decorative floor construction component are an integral subassembly that is laid over the construction floor construction component, etc. Where the underlayment component, the underlayment component and the decorative floor construction component, or the underlayment component and decorative floor construction component subassembly are secured to the floor construction board component, the concrete floor construction component, etc., they are removably secured with an adhesive, staples, or other fastening means that enables the underlayment component, the decorative floor construction component, or the underlayment component and the decorative floor construction component (held in place primarily by gravity) to be easily removed from the floor construction board component, the concrete floor construction component, etc.

In general, the underlayment is a compliant material and the construction component/underlayment assemblies disclosed herein can be manufactured by incorporating the underlayment to provide contractors a product available for purchase. Furthermore, the compliant material and the construction component/underlayment assemblies disclosed herein can be made at the job site by incorporating the underlayment to provide contractors a product with great flexibility and cost savings. In one embodiment, contractors would only need to stock and utilize standard relatively low cost construction components when constructing or renovating buildings. Where select portions of a building require construction components with mechanical properties that are not provided by standard construction components, rather than having to purchase and stock relatively expensive construction components to meet these application requirements, the contractors could utilize construction component/underlayment assemblies that are made with standard building components.

For example, in multi-occupant buildings, such as apartment buildings, the walls separating the rooms of an apartment typically can be constructed with standard gypsum board. However, the walls between apartments utilizing only standard gypsum board in the wall construction transmit sound at undesirable levels. With the on site fabrication of construction component/underlayment assemblies as described herein, which are made with standard gypsum board and an underlayment that provides reduced sound transmission properties, contractors would improve the overall acoustical properties of the resulting apartment units and reduce overall sound transmission from one apartment unit to another.

The foregoing has outlined rather broadly the features and technical advantages of the present invention in order that the detailed description of the invention that follows may be better understood. Additional features and advantages of the methods and compositions disclosed herein will be described hereinafter which form the subject of the claims of the invention. It should be appreciated that the conception and specific embodiment disclosed may be readily utilized as a basis for modifying or designing other structures for carrying out the same purposes of the methods and compositions disclosed herein. It should also be realized that such equivalent constructions do not depart from the methods and compositions disclosed herein. The novel features which are believed to be characteristic of the methods and compositions disclosed herein, both as to its organization and method of operation, together with further aspects and advantages will be better understood from the following description.

In addition to the exemplary aspects and embodiments described above, further aspects and embodiments will become apparent by reference to the drawings and tables and by study of the following descriptions.

### BRIEF DESCRIPTION OF THE DRAWINGS

Exemplary embodiments are illustrated in the referenced figures of the drawings. It is intended that the embodiments and figures disclosed herein are to be considered illustrative rather than limiting.
Figure 1 is a cross sectional view of a conventional wall structure showing a conventional gypsum wallboard construction.
Figure 2 depicts one embodiment where a compliant material or underlayment is positioned between two layers of gypsum wallboard.
Figure 3 is a cross sectional view of a wall structure incorporating the gypsum wallboard - compliant material - gypsum wallboard configuration as shown in Figure 2.
Figure 4 depicts the results of a standardized airborne sound transmission test comparing a conventional 0.625 inch gypsum wallboard and a ¼ inch gypsum - compliant material - ¼ inch gypsum wallboard configuration.
Figure 5 is a schematic perspective view of a compliant material/underlayment supplied as a roll good.

### DETAILED DESCRIPTION

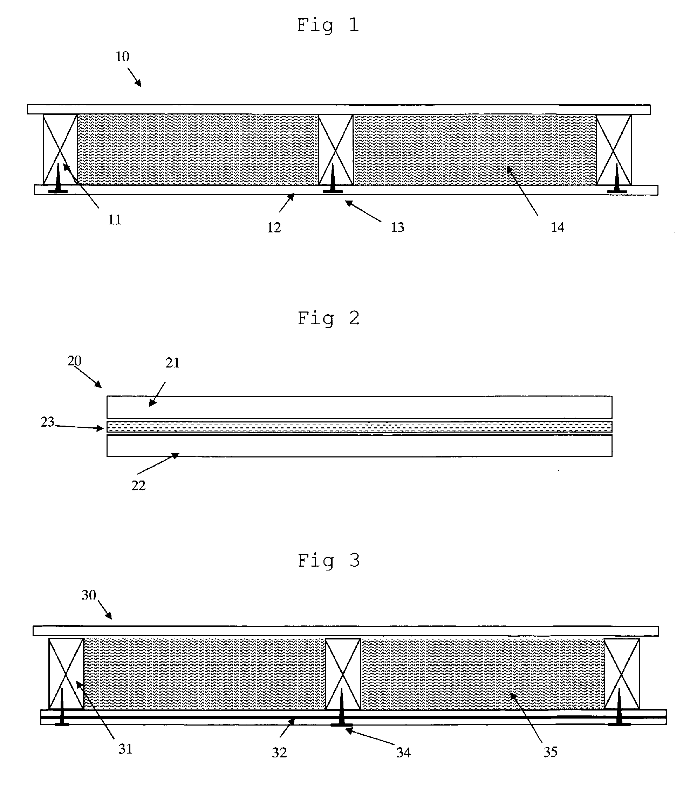

In traditional construction applications, it is known in the art to reduce the mechanical connection between layers of gypsum wallboard to increase sound transmission loss. For example, it is known that staggered use of wood studs or the use of resilient metal furring strips to serve as supports for the gypsum wallboard layers independent one to another are effective in increasing sound transmission loss. Multiple layers of gypsum wallboard is also known to increase sound transmission loss. As shown in Figure 1, the addition of sound absorbing material in a wall system 10 is used to provide thermal and acoustical properties. However, there exists a need for improved materials and methods for increasing sound transmission loss in residential and commercial construction.

Referring still to Figure 1, conventional lightweight construction in North America typically consists of framing materials 11, made from wood or steel, oriented vertically and arranged in a regular periodic manner so as to define a framed structure (such as a wall). This frame structure is typically covered with gypsum wallboard 12 to provide structure, fire protection, aesthetics, and sound insulation to the rooms of a building. The gypsum wallboard is typically attached to the framing 11 by the use of nails or screws 13. Occasionally, insulating material 14 may be added to the cavity defined by the framing and the gypsum wallboard for thermal or sound insulating purposes. The entire structure comprises a wall system 10.

Referring now to Figure 2, it has been discovered that disposition of underlayment 23 between two construction components 22 in a conventional (standard) wall construction increased sound transmission loss at sound frequencies typically encountered in an average building and increased the Sound Transmission Class ("STC") of the composite wall structure. Similarly, other wall, ceiling, and floor construction components, including, but not limited to, wall, ceiling, and floor construction boards, such as, but not limited, to 4X8, 4X9, 4X10, and 4X12 foot gypsum boards, cement boards, and wood fiber boards (e.g. OSB boards, particle boards, and plywood); concrete block walls, ceilings, and floors; decorative wall and ceiling construction components, such as but not limited to laminates with decorative surface layers (e.g. hardwood or simulated hardwood surface layers, fabric layers, etc.); and decorative floor construction components, which may be a permanent component of a floor or an unattached or readily removable floor construction component that overlies conventional permanent floor construction components, such as but not limited to carpeting, cushioned carpeting, rugs, cushioned rugs, vinyl flooring, cushioned vinyl flooring, tiles, flexible or vinyl tiles, and flooring laminates with decorative surface layers (e.g. hardwood or simulated hardwood surface layers, tile or simulated tile surface layers, etc.), could be fabricated to take advantage of the increased sound transmission loss and increased STC of the composite wall structure described herein. These construction component/underlayment assemblies have supplemental mechanical properties provided by the underlayment 23 that are not present in the construction components of the conventional assemblies and/or have supplemental mechanical properties provided by the underlayment 23 that enhance the mechanical properties of the construction components of the assemblies, such as, but not limited to, enhanced sound transmission reduction.

As shown in Figure 2, the underlayment 23 includes a single layer provided between a first layer of gypsum wallboard 21 and a second layer of gypsum wallboard 22 to supplemental the mechanical properties of the wall structure 20. The thicknesses of the two layers of gypsum wallboard and of the compliant material are selected such that total thickness of the three assembled layers of the wallboard structure 20 is equivalent to that of standard gypsum wallboard construction. In one embodiment, the total thickness is approximately 0.625 inches (15.875 mm). Underlayment 23 could include one or more layers. Preferably, the underlayment 23 is a single layer of compliant material, such as a nonwoven mat of fiberglass. In one preferred embodiment, the underlayment 23 is ECOMAT TYPE G 600 glass fiber insulation mat (Johns Manville, Denver, CO). Type G 600 is a binderless, nonwoven textile insulation mat having a thickness of about 0.25 inches (6.5 mm). Alternate preferred embodiments could include glass fiber mats having thicknesses of between about 0.118 inches and about 1.18 inches (3.0 mm and 30.0 mm) (ECOMAT, Johns Manville, Denver, CO).

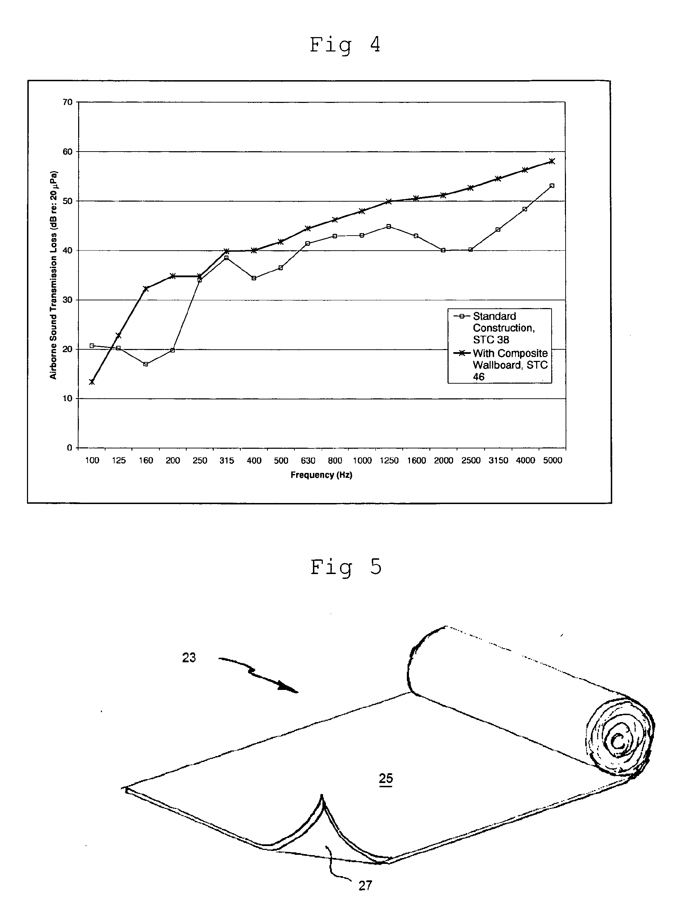

Without being bound by one particular theory, it is thought that the compliant layer 23 in the composite wallboard structure 20 allows for minute amounts of relative motion between the two layers of gypsum wallboard 21, 23 and provides a vibration break that prevents the transmission of vibrational energy through the wall structure 30 (Figure 3). In a standardized airborne sound transmission loss test (ASTM E90), replacing one 0.625 inch layer of gypsum wallboard 12, with the composite wallboard structure 32, as shown in Figure 3, resulted in an increase of sound transmission loss at nearly all frequencies of interest (see Figure 4) and an increase in the Sound Transmission Class ("STC"), the typical single-number rating used to classify building constructions for sound insulation performance.

The passage of sound transmission from one room of a building into another room or source within or outside the building is known as "sound transmission." Sound transmission loss measures the effectiveness of a structural component, such as door, wall, floor, or other barrier, in restricting the passage of sound and varies with frequency. Typically, sound transmission loss is greater at higher frequencies. As referenced above, a sound transmission loss measurement test has been defined and standardized by the American Society for Testing and Materials (ASTM E90). Under ASTM E90, a test opening is created between two isolated reverberation rooms. A test specimen comprising a wall or floor/ceiling construction is mounted and sealed within the test opening. Measurements are made in both rooms at sixteen frequencies in 1/3 octave bands from 125 to 4000 cycles per second (cps) (also expressed as "Hertz" or "Hz"). Sound transmission loss is taken as the difference, at each measurement frequency, of the measured sound pressure levels in each room, adjusted for absorption in the second, or "receive" room. The unit of sound transmission loss is the decibel (dB). Higher transmission loss values of a wall component equate to an improved ability to act as a barrier to the passage of unwanted or undesirable sound or noise.

STC is a single number rating determined from the ASTM E90 test method sound transmission loss data. An STC rating is calculated by comparing the measurements of transmission loss made at the frequencies proscribed by ASTM E90 with a standardized reference contour. The sum of deficiencies below the reference contour cannot be greater than 32 dB and a maximum deficiency at a single test point cannot exceed 8 dB. When the contour is at its highest value that meets the deficiency requirements outlined above, the STC for the article being tested is the transmission loss corresponding to the intersection of the counter and the 500 Hz ordinate. STC ratings are calculated in accordance with ASTM designation E-413.

Common internal partition walls used in residential dwellings with gypsum wallboard attached directly to both sides of wood studs have an STC rating of about 32-35. The addition of sound absorbing material 14, as shown in Figure 1, in a wall cavity between a first and second layers of gypsum wallboard generally increases the STC rating to about 35-38. When tested according to ASTM E90, the composite wall structure employing underlayment 23 as shown in Figure 2 increased the STC rating to about 46 (see Figure 4), a measured increase in sound transmission reduction of about 21 percent (21%). An STC rating of 46 exceeded the minimum STC value acceptable for multi-family housing as determined by the U.S. Department for Housing and Urban Development (sound transmission from living unit to living unit, in an average noise environment, where the corridor floors are carpeted require an minimum STC rating of 45).

Referring now to Figure 5, preferably, the underlayment 23 of the subject invention is flexible or pliable, such as the embodiment shown in Figure 5, so that the underlayment can be packaged, stored, shipped, and handled in roll form. The underlayment 23 has first and second major surfaces 25 and 27 that are each defined by the length and the width of the underlayment. The underlayment 23 may be provided in different lengths, but would typically be at least about 164 feet in length (50 meters). As a practical matter, when the underlayment 23 is provided in roll form, the length of the underlayment 23 is only limited by the size and weight of the roll, which should have a size and weight that facilitates the packaging, storage, shipment, handling, and application of the underlayment. Preferably, the underlayment 23 can be easily severed to desired lengths at the job site with a knife or other conventional cutting tool for application to wall, ceiling, and/or floor construction components and/or may be transversely separable by hand e.g. through the use of longitudinally spaced-apart transverse lines of weakness (such as but not limited to lines of perforations) that are located a standard eight feet or some other standard construction board dimension apart along the length of the underlayment.

The underlayment 23 may be provided in different widths with the underlayment typically being between about 1.0 and about 2.2 meters in width (3.28 and 7.22 feet). However, for applications where the underlayment 23 is to be applied to a series of construction boards, such as but not limited to wall boards, it may be beneficial to have an underlayment about 8 feet to about 10 feet in width (2.44 and 3.05 meters) so that the underlayment could be applied in one continuous operation from floor to ceiling over a plurality of wall boards such as the wall boards of an entire wall.

In one preferred embodiment, one major surface of the underlayment 23 has an adhesive (e.g. a pressure sensitive or rewettable adhesive) thereon so that the underlayment can be easily and quickly secured to one of the construction components of a wall, ceiling, or floor construction component/underlayment assembly as the assembly is being fabricated on site. Preferably, the underlayment 23 is a self-adhering underlayment and the adhesive is a pressure sensitive adhesive that is overlaid, until application, by a release sheet that is surface treated with silicone or another suitable release agent and protects the adhesive from degradation prior to application. The adhesive may be a continuous coating that is substantially coextensive with the major surface of the underlayment 23 or may be discontinuous (e.g. spaced apart lines of adhesive, dots of adhesive, etc.) and both major surfaces of the underlayment 23 may have an adhesive thereon for bonding the underlayment 23 to both of the construction components.

Where it is desired to reduce sound transmission through a wall, ceiling, and/or floor, an underlayment 23 can be used in the construction component/underlayment assembly of the subject invention that is or includes one or more layers of sound-deadening material of the same or differing thicknesses.

Preferably, the construction component/underlayment assembly 20 as shown in Figure 2 is fabricated at the job site and may be used to enhance the performance of walls, but could be used in ceilings, and/or floors in both new building construction and the upgrading of existing building structures. Figure 3 shows a wall 30 constructed with the construction component/underlayment assembly 32 wherein the construction components are gypsum boards. Insulating material 35 can be added to the cavity for thermal or sound insulating purposes. Preferably, the wall is constructed by first securing a first layer of gypsum board with nails, screws and/or adhesive. A layer of underlayment 23 is then bonded, stapled or otherwise secured to a major surface of the gypsum board. The underlayments 23 can be applied in vertically extending strips (e.g. strips extending from floor to ceiling) that preferably are between about 1 and about 2.2 meters (3.28 and about 7.22 feet wide) and the height of the wall. When the strips of underlayment 23 are applied in a vertical direction, these vertically extending strips of the underlayment 23 may abut or overlap adjacent strips of the underlayment so that the underlayments form a layer within the wall that is coextensive or substantially coextensive with the first layer of construction boards. The underlayments 23 can also be applied in horizontally extending strips (e.g. strips extending for part or all of the length of the wall) that preferably are between about 1 and about 2.2 meters wide (3.28 and about 7.22 feet) and have a length to overlay at least two construction boards and preferably all of the construction boards of the wall. When the strips of underlayment 23 are applied in a horizontal direction, these horizontally extending strips of the underlayment 23 may abut or overlap adjacent strips of the underlayment so that the underlayments form a layer within the wall that is coextensive or substantially coextensive with the first layer of construction boards and thus the wall. The construction boards of the second layer of construction boards are then secured to the studs 31 with nails or screws to complete the fabrication of the construction component/underlayment assemblies 32 and the wall 30 or, where the application will permit, the construction boards are then bonded to the underlayment 23 to complete the fabrication of the construction component/underlayment assemblies 20 and the wall 30. The wall 30 may then be taped, mudded and finished, e.g. with texture or paint.

While the on-site fabrication of the construction component/underlayment assemblies 20 has been described in connection with wall 30, the fabrication of construction component/underlayment assemblies of a floor and/or ceiling would be the same with the strips of underlayment 23 extending lengthwise or widthwise of the construction boards and abutting or overlapping to form a layer within the floor and/or ceiling that is coextensive with or substantially coextensive with the floor and/or ceiling.

While a number of exemplary aspects and embodiments have been discussed above, those of skill in the art will recognize certain modifications, permutations, additions, and subcombinations thereof. It is therefore intended that claims hereafter introduced are interpreted to include all such modifications, permutations, additions, and subcombinations as are within their spirit and scope.

## Claims

1. A method for on-site fabrication of a wall, ceiling, or floor construction component/underlayment assembly, comprising:
providing a first wall, ceiling or floor construction component; the first construction component having a length, a width, and a thickness; the first construction component having first and second major surfaces that are each defined by the length and the width of the first construction component; the first construction component having mechanical properties;
providing a second wall, ceiling or floor construction component; the second construction component having a length, a width, and a thickness; the second construction component having first and second major surfaces that are each defined by the length and the width of the second construction component; the second construction component having mechanical properties;
providing an underlayment means having a supplemental mechanical property for supplementing the mechanical properties of the first and second construction components;
applying the underlayment means to the first major surface of the first construction component and securing the underlayment means to the first major surface of the first construction component to form an underlayment layer;
overlaying the underlayment means and the first major surface of the first construction component with the second construction component; and
securing the second construction component to the first construction component with the underlayment means sandwiched between the second and first construction components to form a wall, ceiling or floor assembly with the supplemental mechanical property of the underlayment means.

2. A method according to claim 1, wherein the underlayment layer formed by the underlayment means substantially overlies the entire first major surface of the first construction component.

3. A method according to claim 2, wherein the thickness of the underlayment layer is between about 3.0 mm and about 30.0 mm.

4. A method according to claim 1, wherein the underlayment means is flexible and a roll good.

5. A method according to claim 1, wherein the first and second construction components are gypsum boards, cement boards, or wood fiber boards.

6. A method according to claim 5, wherein the first and second construction components are gypsum boards.

7. A method according to claim 6, wherein the first and second construction components are gypsum wallboards.

8. A method according to claim 1, wherein the underlayment means comprises a nonwoven fiberglass mat.

9. A method according to claim 8, wherein the nonwoven fiberglass mat has a thickness of between about 3.0 mm and about 30.0 mm.

10. A method according to claim 9, wherein the nonwoven fiberglass mat has a thickness of about 6.5 mm.

11. A method according to claim 1, wherein the supplemental mechanical property of the underlayment means increases sound transmission reduction.

12. A method according to claim 11, wherein the supplemental mechanical property of the underlayment means increases sound transmission reduction by 1 to 21 percent (1-21 %).

13. A method according to claim 12, wherein the supplemental mechanical property of the underlayment means increases sound transmission reduction by 10 to 21 percent (10-21 %).

14. A method according to claim 1, wherein the supplemental mechanical property of the underlayment means increases a Sound Transmission Class (hereinafter "STC") value by about 1 to about 21 percent (1-21%).

15. A method according to claim 14, wherein the supplemental mechanical property of the underlayment means increases the STC value by about 10 to about 21 percent (10-21 %).

16. A method according to claim 1, wherein the supplemental mechanical property of the underlayment means satisfies a STC value for multi-family housing as determined by the U.S. Department for Housing and Urban Development for sound transmission from living unit to living unit, in an average noise environment, where the corridor floors are carpeted.

17. A method according to claim 1, wherein the means used to secure the second construction component to the first construction component with the underlayment means sandwiched between the second and first construction components to form the wall, ceiling or floor assembly also secures the second construction component to a structural support member.

18. A method according to claim 1, wherein the means used to secure the second construction component to the first construction component with the underlayment means sandwiched between the second and first construction component to form the wall, ceiling or floor assembly is an adhesive.

19. A construction component/underlayment assembly, comprising:
a first wall, ceiling or floor construction component; the first construction component having a length, a width, and a thickness; the first construction component having first and second major surfaces that are each defined by the length and the width of the first construction component; the first construction component having mechanical properties;
a second wall, ceiling or floor construction component; the second construction component having a length, a width, and a thickness; the second construction component having first and second major surfaces that are each defined by the length and the width of the second construction component; the second construction component having mechanical properties;
an underlayment including a phase change material that for supplementing the mechanical properties of first and second wall, ceiling, or floor construction components; and
the underlayment and first and second construction components forming a layered construction with the underlayment being located between the first and second construction components.

20. A construction assembly according to Claim 19, wherein:
the first and second construction components are wall, ceiling, or floor construction boards; and
the first and second construction components and the underlayment are permanently secured together.

21. A construction assembly according to Claim 20, wherein the first and second construction components are a first and second wall construction components.

22. A construction assembly according to Claim 21, wherein the first and second wall construction components comprises gypsum wallboard.

23. A construction assembly according to Claim 21, wherein at least one of the first or second wall construction components comprises gypsum wallboard.

24. A construction assembly according to Claim 23, wherein the underlayment includes a sound deadening material for supplementing the mechanical properties of the first and second construction components to reduce sound transmission through the assembly.

25. A construction assembly according to Claim 24, wherein the underlayment means comprises a nonwoven fiberglass mat.

26. A construction assembly according to Claim 25, wherein the nonwoven fiberglass mat has a thickness of between about 3.0 mm and about 30.0 mm.

27. A construction assembly according to Claim 26, wherein the nonwoven fiberglass mat has a thickness of about 6.5 mm.

28. A construction assembly according to Claim 24, wherein the supplemental mechanical property of the underlayment means increases sound transmission reduction by 1 to 21 percent (1-21%).

29. A construction assembly according to Claim 28, wherein the supplemental mechanical property of the underlayment means increases sound transmission reduction by 10 to 21 percent (10-21 %).

30. A construction assembly according to Claim 24, wherein the supplemental mechanical property of the underlayment means increases a STC value by about 1 to about 21 percent (1-21%).

31. A construction assembly according to Claim 30, wherein the supplemental mechanical property of the underlayment means increases the STC value by about 10 to about 21 percent (10-21 %).

32. A construction assembly according to Claim 24, wherein the supplemental mechanical property of the underlayment means satisfies a STC value for multi-family housing as determined by the U.S. Department for Housing and Urban Development for sound transmission from living unit to living unit, in an average noise environment, where the corridor floors are carpeted.

33. A construction assembly according to Claim 19, wherein the means used to secure the second construction component to the first construction component with the underlayment means sandwiched between the second and first construction components to form the wall, ceiling or floor assembly also secures the second construction component to a structural support member.

34. A construction assembly according to Claim 19, wherein the means used to secure the second construction component to the first construction component with the underlayment means sandwiched between the second and first construction component to form the wall, ceiling or floor assembly is an adhesive.
